# EUROPÄISCHE PATENTSCHRIFT

(11) **EP 2 452 188 B1**
(45) Veröffentlichungstag und Bekanntmachung des Hinweises auf die Patenterteilung: **30.10.2019**
(21) Anmeldenummer: 10720749.0
(22) Anmeldetag: 14.05.2010
(51) Int. Cl.: G01N 33/50, G01N 1/28

(54) **ANORDNUNG, SUBSTRAT UND VERFAHREN FÜR EINE PRÄPARATION EINER ZELLPROBE**
ARRANGEMENT, SUBSTRATE AND METHOD FOR PREPARING A CELL SAMPLE
SYSTÈME, SUBSTRAT ET PROCÉDÉ POUR UNE PRÉPARATION D'UN ÉCHANTILLON CELLULAIRE

(30) Priorität: 09.07.2009 DE 102009032428
(43) Veröffentlichungstag der Anmeldung: 16.05.2012
(73) Patentinhaber: Siemens Healthcare GmbH, 91052 Erlangen (DE)
(72) Erfinder: HAYDEN, Oliver, 91074 Herzogenaurach (DE); TEDDE, Sandro Francesco, 91058 Erlangen (DE)
(86) Internationale Anmeldenummer: PCT/EP2010/056661
(87) Internationale Veröffentlichungsnummer: WO 2011/003654

(56) Entgegenhaltungen:
- EP-A1- 1 249 702
- EP-A1- 1 415 710
- WO-A2-2004/034057
- DE-A1-102004 008 319
- US-A1- 2002 001 813
- US-A1- 2008 206 774

## Beschreibung

Die Erfindung betrifft eine Anordnung sowie ein Verfahren für eine Präparation einer Zellprobe.

Die Zellanalytik, insbesondere Einzelzellanalytik, bei der eine Zellprobe, die eine Vielzahl von Einzelzellen umfasst, analysiert wird, ist eine wesentliche Grundlage für prognostische und therapeutische Anwendungen in der klinischen Medizin. Beispielsweise der Nachweis von disseminierten Tumorzellen stellt eine große Herausforderung an die zur Analytik eingesetzten Gerätschaften dar.

Zur Einzelzellenanalytik großer Probenmengen wie beispielsweise 10ml Vollblut wird vorwiegend die Fluoreszenzmikroskopie eingesetzt. Eine wesentliche Voraussetzung für eine aussagekräftige Mikroskopie ist eine kontrollierte und schonende Probenvorbereitung, bei der unter anderem die zu mikroskopierenden Zellen in die selbe Mikroskop-Fokalebene gebracht werden müssen. Hierzu sind im Wesentlichen zwei Ansätze bekannt, die zudem einen hohen Durchsatz erlauben:
- Beim sog. "FACS"-Verfahren ("fluorescence activated cell sorting") sind die Einzelzellen bewegt und werden vereinzelt durch eine Kapillare transportiert. Dort findet mit Hilfe einer starren Optik eine Fluoreszenzdetektion statt. Mit dem FACS-Verfahren ist es möglich, optische Informationen in Form von Streulicht und Fluoreszenz zu detektieren. Nachteilig ist jedoch, dass die Probenvorbereitung mit einer Erythrozytenlyse durchgeführt wird, die typischerweise zu Verlusten bei den zu analysierenden Zellen führen kann.
- In einem alternativen Verfahren sind die Zellen auf einem Substrat arretiert und die Optik des Mikroskops scannt eine vergleichsweise große Fläche, auf der die Zellen fixiert sind. Die Einzelzellen liegen in Form einer Zellsuspension vor. Zur Vorbereitung sind zwei Verfahren bekannt. Beim Verfahren der Firma Cytotrack wird die Zellsuspension auf ein Substrat ausgegossen, welches einer CD ähnelt. Die Einzelzellen werden anschließend in einer Art und Weise gescannt, die prinzipiell dem Lesevorgang einer CD gleichkommt. Dies nimmt etwa 30 Minuten in Anspruch. Auch kann die Zellsuspension beispielsweise auf einen großflächigen Träger gegossen werden, so dass die Zellen mit Hilfe eines Bündels von Lichtleitern abzuscannen sind. Hiermit soll es beispielsweise möglich sein, in etwa 80 Minuten 60 Millionen Zellen einer 10ml Blutprobe zu scannen. An diesen beiden Verfahren ist nachteilig, dass große Substrate benötigt werden, auf die die Zellsuspension ausgegossen wird. Ebenso ist eine aufwändige Scanneroptik evtl. mit Verschiebetisch vonnöten. Außerdem muss eine vergleichsweise aufwändige Voranreicherung von Zellen erfolgen, bei der zunächst Zellen magnetisch markiert werden und anschließend beispielsweise durch Anlegen eines magnetischen Feldes die markierten Zellen selektiert werden.
- In einem weiteren Ansatz werden die gesuchten Tumorzellen beispielsweise immunomagnetisch beziehungsweise durch Zentrifugationstechniken wie beispielsweise dem sog. "OncoQuick"-Verfahren von Greiner Bio-One aufgereinigt und anschließend mit den Mitteln der Fluoreszenzmikroskopie beispielsweise mit einem System der Firma Wavesense abgescannt, anstatt wie oben das gesamte Probenvolumen nach Einzelzellen abzuscannen. Nachteilig wirkt sich hierbei aus, dass mehrere Probenvorbereitungsschritte notwendig sind, wobei mit jedem Schritt einige Analyten verloren gehen.
- Aus US 2008 / 0206774 A1 ist ein Verfahren zur Präparation einer Blutzellprobe bekannt.
- Die US 2008/206774 A1 beschreibt in verschiedenen Ausgestaltungen ein Verfahren zum automatisierten Screening nach Gen-Amplifikationen in biologischen Proben, wobei ein automatisiertes Fluoreszenz-Mikroskop zur Analyse der Fluoreszenz in-situ hybridisierter Proben benutzt wird.

- Des Weiteren beschreibt die WO 2004/034057 A1 ein System und eine Verfahren zum Hochdurchsatz-Screening flüssiger Proben.
- Eine Möglichkeit zur Herstellung und Verwendung von Gel-Kissen und Anordnungen von Gel-Kissen, insbesondere unter Verwendung intelligenter Gele wird beispielsweise in der US2002/001813 A1 beschrieben.
- Weiterhin schlägt die DE 10 2004 008 319 A1 eine Apparatur für die kontinuierliche Durchführung chemisch/biochemischer Reaktionen bzw. Transformationen, diagnostischer Bindungsassays, von Stoffgewinnungs- oder Stofftransportprozessen sowie für Informationsübertragungen in Form eines Festphasenreaktor-Systems vor.
- Weitere Verfahrens- und Vorrichtungsausgestaltungen werden beispielsweise in der EP 1415710 A1 und der EP 1 249 702 A1 offenbart.

Es ist daher die Aufgabe der vorliegenden Erfindung, eine alternative Möglichkeit zur Präparation einer Zellprobe anzugeben.

Diese Aufgabe wird durch die in den unabhängigen Ansprüchen angegebenen Erfindungen gelöst. Vorteilhafte Ausgestaltungen ergeben sich aus den abhängigen Ansprüchen.

Die erfindungsgemäße Lösung sieht eine Anordnung zur Deponierung von Zellen auf einem Substrat zur Präparation einer Zellprobe vor, mit einem Gefäß zur Aufbewahrung der auf dem Substrat zu deponierenden Zellen, wobei das Gefäß eine Auslassöffnung zur Entnahme von Zellen aus dem Gefäß aufweist. Weiterhin weist die Anordnung eine Antriebsvorrichtung auf, mit der das Substrat relativ zu dem Gefäß an der Auslassöffnung vorbei bewegbar ist.Das Substrat ist ein flexibles, längliches Band, insbesondere ein Polymerband oder ein Metallband. Die Antriebsvorrichtung ist eine von einem Antrieb in Rotation versetzbare, drehbare Welle. Auf der Antriebswelle ist eine Aufwickelrolle zu befestigen, um das Substrat, insbesondere das mit den Zellen versehene Substrat, auf der Aufwickelrolle aufzuwickeln, dadurch gekennzeichnet, dass eine Spannvorrichtung (150, 160) zum Spannen des Substrates (30) vorgesehen ist, welche zumindest eine bewegliche Auflage (160) oder zumindest eine bewegliche Rolle aufweist, wobei die Auflage (160) oder die Rolle in einer Richtung (161) verschiebbar ist, die im Wesentlichen senkrecht zur Bewegungsrichtung des Substrates (30) orientiert ist.

Dabei sind auf der Oberseite und auf der Unterseite des Substrates Abstandshalter vorgesehen. Diese bewirken, dass sich in radialer Richtung benachbarte Abschnitte des auf der Aufwickelrolle aufgerollten Subtrates nicht berühren.

Weiterhin kann an der Oberseite des Substrates, auf die die Zellen aufgebracht werden, eine Haftschicht vorgesehen sein, an der die Zellen haften, insbesondere ein Adhäsionspromotor für die Zellen. Alternativ oder zusätzlich kann an der Unterseite des Substrates eine für die Zellen nichthaftende Schicht vorgesehen sein.

Mit Hilfe einer Spannvorrichtung lässt sich die Spannung des Substrates einstellen.

Die Spannvorrichtung kann durch zumindest eine bewegliche Auflage oder durch zumindest eine bewegliche Rolle realisiert werden. Dabei ist die Auflage oder die Rolle in einer Richtung verschiebbar, die im Wesentlichen senkrecht zur Bewegungsrichtung des Substrates orientiert ist.

Darüber hinaus kann der Abstand zwischen der Auslassöffnung des die Zellprobe enthaltenden Gefäßes und dem Substrat einstellbar sein, derart, dass hiermit die Dicke h des sich auf dem Substrat bildenden Flüssigkeitsfilms einstellbar ist. Alternativ oder zusätzlich hierzu kann ein Abstreifobjekt vorgesehen sein, dessen Abstand zum Substrat einstellbar ist und mit dem die Dicke h des sich auf dem Substrat bildenden Flüssigkeitsfilms einstellbar ist.

Ein erfindungsgemäßes Substrat für eine eine Vielzahl von Zellen aufweisende Zellprobe zeichnet sich dadurch aus, dass das Substrat ein flexibles, längliches Band, insbesondere ein Polymerband oder ein Metallband, ist.

Das Substrat ist auf einer Aufwickelrolle aufrollbar. Weiterhin sind auf der Oberseite und/oder auf der Unterseite des Substrates Abstandshalter vorgesehen sind, die bewirken, dass sich in radialer Richtung benachbarte Abschnitte des auf der Aufwickelrolle aufgerollten Subtrates nicht berühren.

Die Haftschicht kann auch derart ausgebildet ist, dass markierte Zellen an der Oberseite des Substrates fixiert werden.

Vorteilhafterweise ist die Haftschicht derart strukturiert, dass sich die aufgebrachten Zellen in definierten Positionen auf dem Substrat befinden.

In einem erfindungsgemäßen Verfahren zur Deponierung von Zellen auf einem Substrat zur Präparation einer Zellprobe werden die Zellen mittels der erfindungsgemäßen Anordnung zur Deponierung von Zellen aus einem Gefäß auf das Substrat aufgebracht, während das Substrat an dem Gefäß vorbei bewegt wird, wobei das Substrat ein flexibles, quasi-zweidimensionales Band ist. Dabei werden zunächst Zellen aus dem Gefäß auf Abschnitte des Bandes aufgebracht. Später werden die Abschnitte des Bandes mit dort aufgebrachten Zellen auf einer Aufwickelrolle aufgerollt.

Vorteilhafterweise wird nach dem Aufbringen der Zellen auf das Band und vor dem Aufwickeln des Bandes auf der Aufwickelrolle eine Analyse der Zellprobe durchgeführt.

Die Vorteile der erfindungsgemäßen Lösung lassen sich wie folgt zusammenfassen:
- Da das Substrat beziehungsweise das Band aufgewickelt werden kann, besteht nur ein geringer Platzbedarf.
- Die Optik, beispielsweise ein Mikroskop, ist statisch und damit einfacher und kostengünstiger als in den oben erwähnten Systemen, bei denen eine Verschiebung des Mikroskops in bis zu drei Richtungen x, y, z notwendig ist.
- Das Band kann beispielsweise mit Hilfe eines aus mehreren Lichtleiterkabeln zusammengesetzten Scanners in seiner vollen Breite in nur einem Durchgang gescannt werden.
- Das Substrat muss im Gegensatz zu bekannten Scannern nicht in allen drei Richtungen x, y, z verschiebbar sein.
- Das Scannen der Zellen kann unmittelbar nach dem Deponieren der Zellen auf dem Substrat und vor dem Aufwickeln auf der Aufwickelrolle erfolgen.

Weitere Vorteile, Merkmale und Einzelheiten der Erfindung ergeben sich aus dem im Folgenden beschriebenen Ausführungsbeispiel sowie anhand der Zeichnungen.

Dabei zeigen:
- Figur 1A: eine Vorrichtung zum Präparieren einer Probe,
- Figur 1B: eine Vorrichtung zum Analysieren der Probe,
- Figur 2: eine Vorrichtung zum Präparieren einer Probe mit unmittelbar anschließender Zellanalyse,
- Figuren 3, 4: jeweils einen Längsschnitt und eine Draufsicht auf ein Substrat,
- Figur 5: einen Längsschnitt durch ein Substrat.

In den Figuren sind identische beziehungsweise einander entsprechende Bereiche, Bauteile, Bauteilgruppen oder Verfahrensschritte mit denselben Bezugsziffern gekennzeichnet.

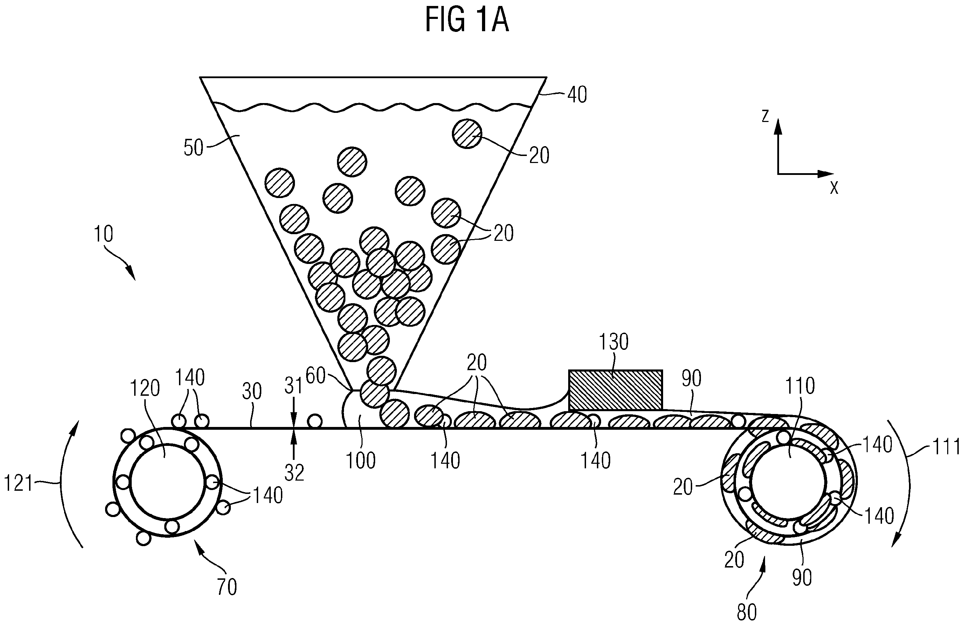

Die Figur 1A zeigt eine Anordnung 10, mit der zur Vorbereitung beziehungsweise zur Präparation einer Zellprobe beispielsweise für eine Zellanalytik zu untersuchende Zellen 20 auf ein Substrat 30 aufgebracht werden können. Die Anordnung 10 weist ein trichterförmiges Gefäß 40 auf, in dem sich eine die Zellen 20 aufweisende Zellsuspension 50 befindet. An der Unterseite des Gefäßes 40 befindet sich eine Auslassöffnung 60, durch die die Suspension 50 und mit ihr die Zellen 20 auf das Substrat 30 aufgebracht werden kann. Sedimentation im Gefäß 40 bewirkt, dass die Zellen 20 in der Suspension 50 nach unten sinken und so ohne weitere Hilfsmittel der Auslassöffnung 60 entnehmbar sind. Nichtsdestotrotz kann beispielsweise eine Pumpe (nicht dargestellt) o.ä. verwendet werden, um die Durchflussrate dn/dt beziehungsweise dVol/dt durch die Auslassöffnung 40, das heißt die Anzahl dn der Zellen 20 oder das Volumen dVol an Suspension 50, die pro Zeiteinheit dt die Auslassöffnung 60 passieren, zu beeinflussen. Alternativ oder zusätzlich kann die Auslassöffnung 60 beispielsweise mit einem Ventil (nicht dargestellt) o.ä. kontinuierlich zu öffnen und zu verschließen sein.

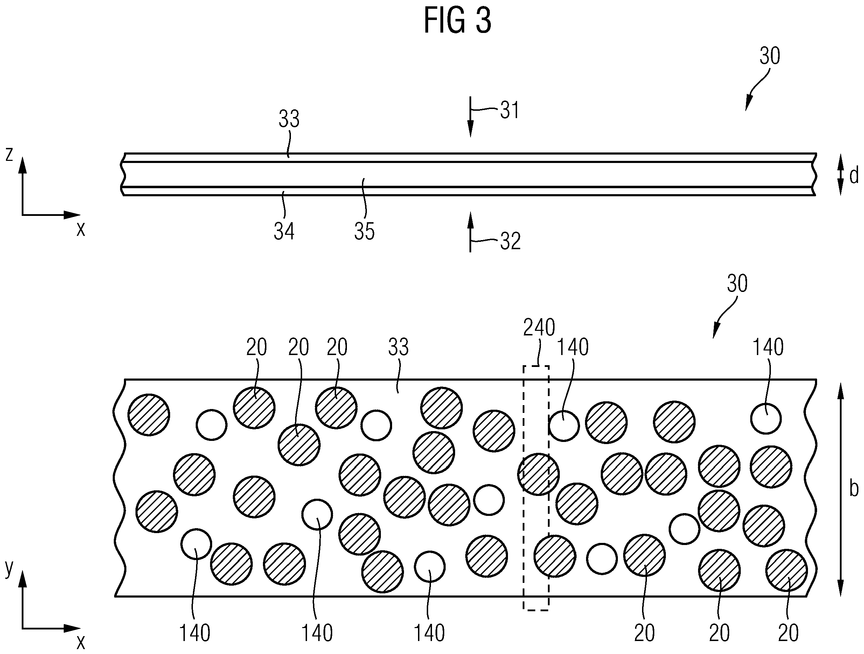

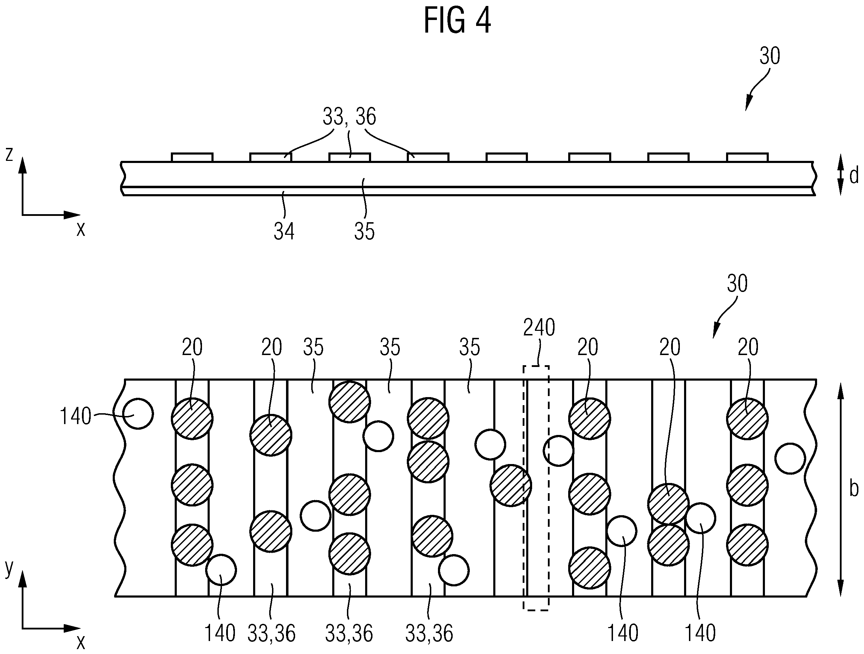

Das Substrat 30, auf das die Zellsuspension 50 verbracht werden soll, ist ein quasi-zweidimensionales, längliches Band, beispielsweise ein Polymerband oder ein Metallband. Dabei ist der Begriff "quasi-zweidimensional" so zu verstehen, dass die Dicke d des Bandes, die der selbstverständlich vorhandenen dritten Dimension entsprechen soll, im Vergleich zu den beiden anderen Dimensionen, nämlich Länge l und Breite b des Bandes, zu vernachlässigen ist. Nicht zuletzt aufgrund dieser Eigenschaft ist das Band flexibel und auf einer entsprechenden Rolle aufrollbar, so dass sich im Vergleich zu herkömmlichen Substraten eine erhebliche Platzeinsparung ergibt. Der Begriff "länglich" sagt aus, dass die Länge l des Bandes wesentlich größer ist als die Breite b. Typischerweise ist das Band etwa l = 50-100m lang, b = 10-50mm breit (vgl. Figur 3) und d = 10-100µm dick (vgl. Figur 4). Je größer die Bandlänge l und/oder die Breite b des Bandes 30 gewählt werden, desto größer kann auch die auf dem Band zu deponierende Menge an Zellsuspension 50 ausfallen. Demzufolge können auch vergleichsweise hoch verdünnte Proben verarbeitet werden.

In der Figur 1A befindet sich das noch unbelegte Substrat beziehungsweise Band 30, auf dem im weiteren Verlauf Zellen 20 deponiert werden sollen, zunächst in Längsrichtung des Bandes 30 aufgerollt auf einer Abwickelrolle 70. Dies ist beispielsweise vergleichbar mit einer Bandrolle für ein Tonbandgerät. Um die Zellen 20 auf das Band 30 zu verbringen, wird das Band 30 zunächst zumindest teilweise von der Abwickelrolle 70 abgewickelt. Die abgewickelten Abschnitte des Bandes 30 werden unterhalb der Auslassöffnung 60 am Gefäß 40 vorbei transportiert, so dass sich die Zellen 20 beziehungsweise die Suspension 50 auf das Band 30 ergießen. Auf dem Band 30 bildet sich ein Flüssigkeitsfilm 90 bestehend aus der Zellsuspension 50, in dem sich die Zellen 20 befinden, wobei sich am Ort der Auslassöffnung 60 ein Meniskus 100 ausbildet.

Nachdem die Zellen 20 auf das Band 30 aufgebracht sind, wird das Band 30 auf einer Aufwickelrolle 80 aufgewickelt. Die Aufwickelrolle 80 ist abnehmbar auf einer Antriebswelle 110 einer Antriebsvorrichtung befestigt, die mit Hilfe eines hier nicht gezeigten Antriebes der Antriebsvorrichtung in Rotation versetzt werden kann. Hierdurch wird letztlich erreicht, dass das Band 30 an der Auslassöffnung 60 vorbei transportiert und auf der Aufwickelrolle 80 aufgewickelt wird.

Die Abwickelrolle 70 ist ebenfalls abnehmbar auf einer drehbaren Welle 120 der Antriebsvorrichtung befestigt, wobei die Welle 120 in der Ausführungsform der Figur 1A frei drehbar ist, das heißt es ist kein Antrieb vorgesehen, der die Welle 120 in Rotation versetzen würde. Nichtsdestotrotz kann natürlich in einer komplexeren Ausgestaltung auch für die Welle 120 ein Antrieb vorgesehen sein, beispielsweise um in der Lage zu sein, die Transportrichtung des Bandes zu verändern.

Vor dem Deponieren der Zellen 20 auf dem Band 30 wird die Abwickelrolle 70 mit noch unbelegtem Band 30 auf die Welle 120 aufgesteckt und evtl. fixiert, um ein Abrutschen von der Welle zu verhindern. Auf die Antriebswelle 110 wird eine leere Aufwickelrolle 80 gesteckt, welche ebenfalls evtl. fixiert wird. Es wird dann manuell oder auch automatisch ein Anfangsabschnitt des Bandes 30 der Abwickelrolle 70 an der Auslassöffnung 60 vorbei geführt und an der Aufwickelrolle 80 befestigt, beispielsweise eingeklemmt o.ä.. Anschließend kann die Antriebswelle 110 in Rotation versetzt werden, so dass das Band 30 von der Abwickelrolle 70 auf die Aufwickelrolle 80 transportiert wird, während gleichzeitig aus der Auslassöffnung 60 die Zellsuspension 50 mit den Zellen 20 auf das Band 30 strömt.

Die Drehrichtungen der Wellen 110, 120 sind durch Pfeile 111, 121 dargestellt.

Idealerweise läuft das Ab- und Aufwickeln kontinuierlich und mit konstanter Geschwindigkeit v ab, das heißt das Band läuft mit der Geschwindigkeit v an der Auslassöffnung 60 vorbei. Die Antriebswelle 110, auf der die Aufwickelrolle 80 befestigt ist, dreht sich hierzu mit konstanter Winkelgeschwindigkeit ω. Die Geschwindigkeit v ist nur limitiert von der Zuführung von Zellsuspension 50 durch die Auslassöffnung 60. Beispielsweise kann die Bandgeschwindigkeit in einer Größenordnung von v = 10cm/s erreicht werden. Es ist darauf zu achten, dass der Flüssigkeitsfilm 90 während des Aufbringens der Zellen 20 auf das Band 30 nicht abreißt. Weiterhin ist es vorteilhaft, die oben erwähnte Durchflussrate dn/dt beziehungsweise dVol/dt der Auslassöffnung 60 des Gefäßes 40 mit Bandgeschwindigkeit v abzustimmen, um zu gewährleisten, dass das Band 30 ausreichend mit Zellsuspension bedeckt wird, so dass der Flüssigkeitsfilm 90 weder abreißt noch zu dick wird.

Die Höhe beziehungsweise Dicke h des Flüssigkeitsfilms 90, die in einer Größenordnung von h ≈ 5-50µm liegt, kann auch dadurch variiert werden, dass der Abstand des Gefäßes 40 beziehungsweise der Auslassöffnung 60 vom Band 30 einstellbar ist, beispielsweise indem das Gefäß 40 und/oder das Band 30 in z-Richtung verschoben wird. Die Dicke h des Flüssigkeitsfilms 90 kann außerdem dadurch eingestellt werden, dass ein ebenfalls in z-Richtung verschiebbares Abstreifobjekt 130 vorgesehen ist. Idealerweise ist die Höhe h des Flüssigkeitsfilms 90 an die Größe der auf dem Band zu deponierenden Zellen in der Weise angepasst, dass der Flüssigkeitsfilm 90 nur eine einzige Zelllage aufweist, dass also in z-Richtung keine zwei Zellen übereinander liegen können.

Im aufgerollten Zustand des Bandes 30 ist zunächst davon auszugehen, dass in radialer Richtung benachbarte Wicklungslagen des Bandes 30 aneinander anliegen. Auf der Oberseite 31 des Bandes 30, auf die die Zellen 20 aufgebracht werden, sind daher Abstandshalter 140 vorgesehen, die bewirken, dass die Wicklungslagen des Bandes 30 im aufgewickelten Zustand nicht miteinander in Kontakt geraten. Dies ist insbesondere relevant für die Aufwickelrolle 80, da das Band 30 hier auf seiner Oberseite 31 die Zellsuspension 50 mit den Zellen 20 trägt. Die Zellen 20 würden ohne Abstandshalter bei aufgewickeltem Band unter erheblicher mechanischer Belastung stehen. Erfindungsgemäß sind entsprechende Abstandshalter auch auf der Unterseite 32 des Bandes 30 befestigt. Als Abstandshalter 140 können beispielsweise sog. "Microspheres" oder "Microbeads", also Mikrokugeln, beispielsweise aus Glas oder Kunststoff, verwendet werden, die zumindest die Ausmaße der Zellen 20, das heißt zumindest deren Radius, aufweisen. Idealerweise sind die einstellbare Höhe h des Flüssigkeitsfilms 90 und die Dimensionierung der Abstandshalter 140 aneinander angepasst.

Die Oberseite 31 des Bandes 30 wird von einem Adhäsionspromotor bedeckt, beispielsweise Polylysin, Fibronektin oder Kollagen, der bewirkt, dass die Zellen 20 an der Oberfläche 31 haften. Da jedoch beim Deponieren der Zellen 20 auf dem Band 30 automatisch der Flüssigkeitsfilm 90 mitgezogen wird, können die Zellen 20 optional auch ohne eine derartige chemische Fixierung auf dem Band 30 gehalten werden. Damit ist es möglich, die Zellen nach dem Scannen beispielsweise für molekulare Untersuchungen weiter zu verwenden. Die Adhäsionspromotoren helfen primär beim Auftragen der Zellen auf das Band, um diese schnellstmöglich zu fixieren. In weiterer Folge können die Promotoren benutzt werden, um eine Veränderung der Position der Zellen auf dem Band zu unterdrücken, wenn das Band beispielsweise erneut durch eine Flüssigkeit gezogen wird. Ein Austrocknen kann durch Lagerung der Aufwickelrolle in feuchter Umgebung verhindert werden.

Die Unterseite 32 des Bandes 30 hat eine für die Zellen 20 nichthaftende Oberfläche. Der Kontaktwinkel von Wasser auf der Unterseite 32 kann durch entsprechende Materialwahl und Oberflächenbeschaffenheit auf den Flüssigkeitsfilm 90 abgestimmt werden, indem beispielsweise die Oberfläche hydrophobisiert wird zum Beispiel durch Funktionalisierung der Polymerfilmoberfläche mit Silanen.

Die Oberfläche des Bandes 30 beziehungsweise der Oberseite 31 des Bandes 30 kann wie in "Single Stern Cell Positioning on Polylysine and Fibronectine Microarrays" von Ruiz et al. (in Micro- and Nanosystems, 2009, 1, 50-56) beschrieben derart strukturiert sein, dass die Zellen 20 gezielt auf dem Band positioniert werden können, so dass das anschließende Scannen des Bandes 30 erleichtert wird.

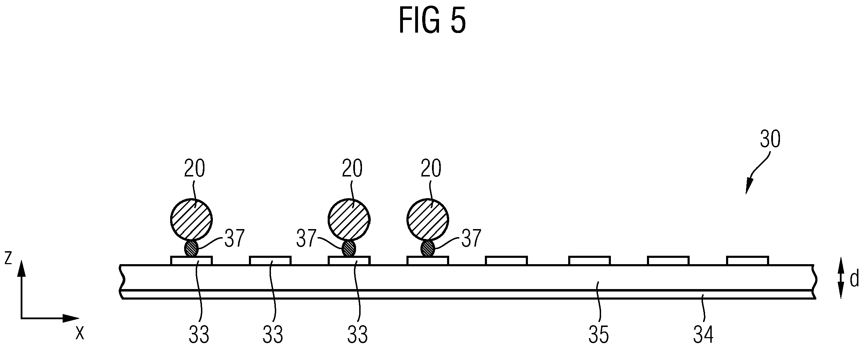

In US 2007 / 0259382 A1 wird beschrieben, dass konkret gesuchte Zellen auf dem Band angereichert werden können. Die Zellen werden markiert und über das sog. "Avidin / Biotin" System mit einer entsprechend funktionalisierten Oberfläche gezielt kovalent gebunden (vgl. Figur 5). Nicht oder nur schwach gebundene Zellen können nach der Überführung der Zellen auf das Band einem Waschschritt unterworfen werden, wobei unter kontrolliert stringenten Bedingungen nicht markierte Zellen weggewaschen werden. Damit reduziert sich die Anzahl der Zellen, die abgescannt werden müssen.

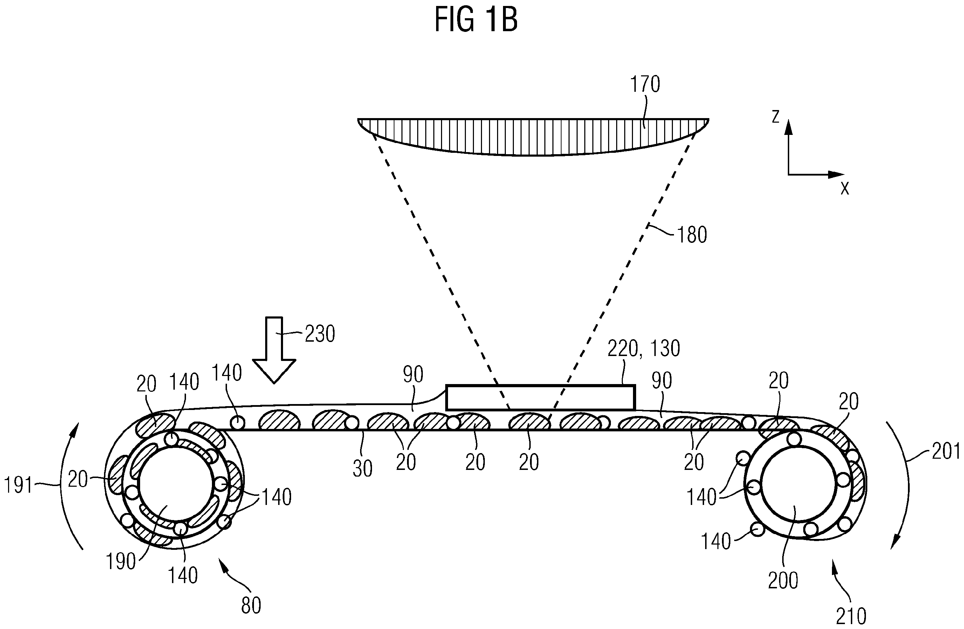

Nach dem oben beschriebenen Aufwickeln des mit Zellen 20 versehenen Bandes 30 auf der Aufwickelrolle 80 wird diese von der Antriebswelle 110 entfernt und entweder für eine spätere Auswertung beziehungsweise Analyse gelagert oder aber direkt zu einer Scanvorrichtung gebracht. Die Scanvorrichtung, dargestellt in der Figur 1B, weist neben einem Scanner 170, der beispielsweise als Fluoreszenzmikroskop ausgebildet sein kann, mit einem Scanbereich 180 eine Einrichtung auf, mit der das aufgewickelte Band wieder abgewickelt und dem Scanner 170 zur Analyse der Zellprobe auf dem Band 30 zugeführt beziehungsweise von dessen optischem Detektor gescannt werden kann. Diese Einrichtung kann beispielsweise ähnlich wie die im Zusammenhang mit der Figur 1A beschriebene eine frei drehbare Welle 190 und eine Antriebswelle 200 aufweisen, wobei die Aufwickelrolle 80 in diesem Fall auf der frei drehbaren Welle 190 befestigt wird. Auf der Antriebswelle 200 wird eine weitere Aufwickelrolle 210 befestigt, auf die das mit den Zellen 20 versehene Band 30 zu transportieren ist, während der Scanner 170 die auf dem Band 30 gespeicherten Zellen 20 analysiert, wenn diese den Scanbereich 180 passieren. Weiterhin ist ein Deckglas 220 zur Mikroskopie vorgesehen, welches in dieser Ausführungsform gleichzeitig die Funktion des Abstreifobjektes 130 der Figur 1A übernimmt.

Die Drehrichtungen der Wellen 190, 200 sind durch Pfeile 191, 201 dargestellt.

Optional ist es möglich, wie durch den Pfeil 230 lediglich angedeutet zusätzliche Puffersuspension und/oder Reagentien zuzuführen, um beispielsweise nachträglich Zellen zu markieren (sog. "Labeling").

Auch während des Scannens des Bandes 30 beziehungsweise der Zellen 20 wird dieses idealerweise kontinuierlich und mit konstanter Geschwindigkeit v durch den Scanbereich 180 transportiert.

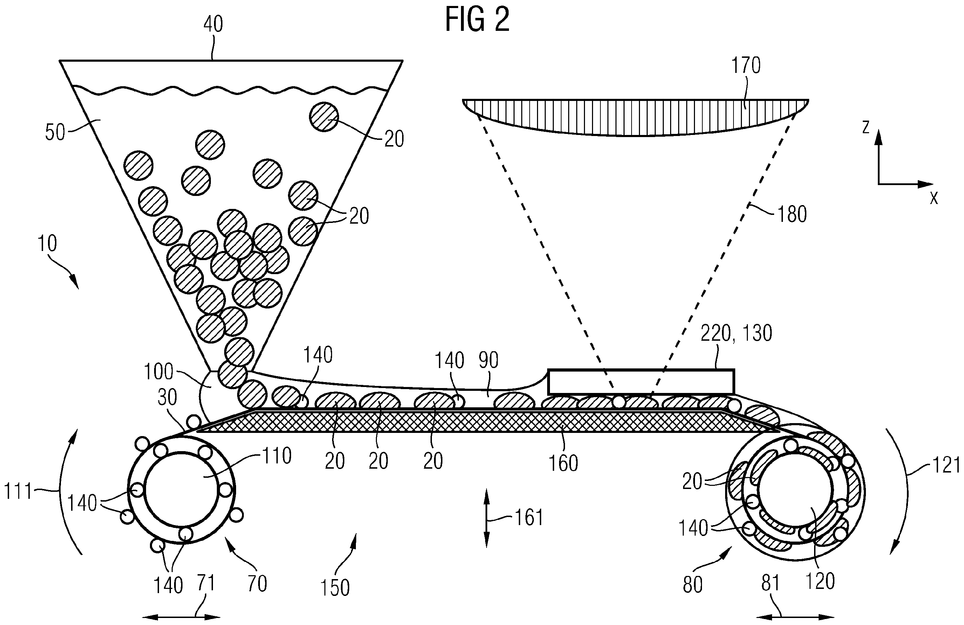

Alternativ und wie im Zusammenhang mit der Figur 2 beschrieben ist es natürlich möglich, die Zellen 20 unmittelbar nach dem Deponieren auf dem Band 30 mit einem entsprechenden Scanner 170, beispielsweise ein Fluoreszenzmikroskop o.ä., zu untersuchen beziehungsweise zu scannen. Die Figur 2 zeigt dementsprechend ein kombiniertes Gerät bestehend aus einer Vorrichtung zum Präparieren des Bandes mit den zu untersuchenden Zellen wie in der Figur 1A und aus einer Scanvorrichtung wie in der Figur 1B.

Weiterhin unterscheidet sich die Ausführungsform der Figur 2 von denjenigen der Figuren 1A und 1B darin, dass gemäß Figur 2 eine Spannvorrichtung 150 vorgesehen ist, die in Form einer Auflage 160 zum Spannen des Bandes 30 ausgebildet ist. Wie durch den Pfeil 161 angedeutet kann die Auflage 160 in z-Richtung verschoben werden, wodurch die Spannung des Bandes 30 beziehungsweise des Bandes 30 einstellbar wird. Alternativ kann die Spannvorrichtung (150) an Stelle der oder zusätzlich zur Auflage 160 beispielsweise auch eine oder mehrere Rollen aufweisen (nicht dargestellt), die ebenfalls in Richtung des Pfeiles 161 verschiebbar sind und bewirken, dass das Band 30 gespannt wird. Zusätzlich kann die Spannung des Bandes 30 dadurch beeinflusst werden, dass Abwickelrolle 70 und/oder Aufwickelrolle 80 wie durch die Pfeile 71, 81 angedeutet verschiebbar sind. Hierzu können beispielsweise die Achsen der Wellen 110, 120 in x-Richtung verschiebbar ausgebildet sein.

Eine derartige Spannvorrichtung kann natürlich auch in den Ausführungsformen gemäß Figur 1A und/oder 1B vorgesehen sein. Die auf das Band 30 verbrachten Zellen 20 werden in dieser Ausführungsform unmittelbar nach dem Deponieren auf dem Band 30 mit Hilfe des Scanners 170 gescannt. Erst im Anschluss daran wird das Band 30 mit Zellen 20 auf der Aufwickelrolle 80 aufgewickelt. Wie schon in der Figur 1B wirkt das Deckglas 220 gleichzeitig als Abstreifobjekt, mit dem die Höhe h des Flüssigkeitsfilms 90 eingestellt wird.

Die Figur 3 im oberen Teil der Darstellung einen Längsschnitt durch ein Band 30. An der Oberseite 31 des Bandes 30 befindet sich eine Haftschicht 33, die als Adhäsionspromotor wirkt und beispielsweise Polylysin, Fibronektin oder Kollagen aufweist, so dass die Zellen 20 an der Oberseite 31 haften. An der Unterseite 32 des Bandes 30 befindet sich eine für die Zellen 20 nichthaftende Schicht 34. Der Zwischenbereich 35 des Bandes 30 zwischen den Schichten 33, 34 ist beispielsweise ein Polymer, das auch transparent ausgebildet sein kann, oder ein Metall.

Der untere Teil der Figur 3 zeigt eine beispielhafte Aufsicht auf das mit Zellen 20 und Abstandshaltern 140 versehene Band 30. Die Abstandshalter 140 werden derart auf dem Band 30 angeordnet, dass sich wie für die Zellen 20 auch eine stochastische Verteilung ergibt. Ebenfalls angedeutet ist der Fokalbereich 240 des Fluoreszenzmikroskops 170. Das Band 30 wird wie oben beschrieben in x-Richtung mit einer Geschwindigkeit v bewegt. Die sich ergebende Zelldichte auf dem Band, das heißt die Anzahl der Zellen 20 pro Flächeneinheit, hängt von der Haftung der Zellen 20 auf der Oberseite 31 des Bandes 30, von der Geschwindigkeit v und von der Durchflussrate dn/dt beziehungsweise dVol/dt ab.

Die Figur 4 zeigt eine alternative Ausführung des Bandes 30, insbesondere der Haftschicht 33. Das Band 30 ist hier als funktionalisiertes Band 30 derart ausgebildet, dass die Zellen 20 nur an definierten Positionen auf dem Band 30 haften. Dies wird dadurch erreicht, dass die Haftschicht 33 strukturiert ist. Während die Haftschicht 33 der Figur 3 den Zwischenbereich 35 des Bandes 30 komplett und lückenlos bedeckt, ist der Zwischenbereich 35 in der Ausführungsform der Figur 4 nur an denjenigen definierten Positionen 36 mit Haftschicht 33 bedeckt, in denen Zellen 20 gebunden werden sollen. Der Übersichtlichkeit wegen sind in der Figur 4 nur einige dieser Positionen 36 gekennzeichnet.

Der untere Teil der Darstellung der Figur 4 zeigt eine Draufsicht auf das Band 30. Die Zellen 20 sind in x-Richtung, das heißt in Transportrichtung des Bandes 30, an definierten Positionen angeordnet. Natürlich ist es möglich, auch in y-Richtung definierte Positionen festzulegen, indem die Haftschicht 33 nicht nur in Streifen auf die Zwischenschicht 35 aufgebracht ist, sondern beispielsweise in einer gekreuzten Anordnung (nicht dargestellt).

Das oben erwähnte "Labeling" beziehungsweise das Markieren funktioniert derart, dass als strukturierte Haftschicht 33 wie in Figur 5 angedeutet beispielsweise Avidin verwendet wird. Biotin 37 wird verwendet, um Zellen 20 zu kennzeichnen. Da Avidin 33 bekanntermaßen geeignet ist, Biotin 37 zu binden, können markierte beziehungsweise gelabelte Zellen 20 an definierten Positionen auf dem Band 30 fixiert werden.

Da Avidin ausschließlich mit Biotin markierte Zellen bindet, ist das System Avidin - Biotin hochspezifisch. Das heißt dieses System könnte verwendet werden, um ausschließlich spezifische Zellen zu binden, die z.B. darüber hinaus mit Antikörpern markiert sind, wobei die Antikörper zusätzlich Biotin tragen.

Die oben angegebene Dimensionierung l = 100m, b = 10-50 mm, d = 10-500µm des Bandes ist natürlich nur als Beispiel zu verstehen. Andere Werte, insbesondere hinsichtlich der Länge l und der Breite b, sind selbstverständlich denkbar. Dabei kann die Breite b des Bandes beispielsweise an der Dimensionierung des Scannbereiches der Optik angepasst sein. Ein typisches Fluoreszenzmikroskop kann in einer Richtung senkrecht zur Laufrichtung des Bandes, das heißt gemäß Figur 1 in x-Richtung, einen Bereich in einer Größenordnung von ∼1cm abtasten. Dementsprechend könnte eine Breite b des Bandes von b ≈ 1cm gewählt werden. Die Länge l des Bandes kann ebenso an den technischen Gegebenheiten ausgerichtet werden. So kann beispielsweise leicht aus der Menge der auf das Band zu verbringenden Zellsuspension in Kombination mit der verfügbaren Breite b des Bandes eine benötigte Bandlänge l berechnet werden. Ein Probenvolumen von 1ml Vollblut breitet sich bei einer Höhe h des Flüssigkeitsfilms 90 von 10µm auf eine Fläche von 100000mm² aus. Demzufolge benötigt man bei einer Breite b=10mm des Bandes eine Bandlänge von l=10m.

## Patentansprüche

1. Anordnung zur Deponierung von Zellen (20) auf einem Substrat (30) zur Präparation einer Zellprobe, mit
- einem Gefäß (40) zur Aufbewahrung der auf dem Substrat (30) zu deponierenden Zellen (20), wobei das Gefäß (40) eine Auslassöffnung (60) zur Entnahme von Zellen (20) aus dem Gefäß (40) aufweist, und
- einer Antriebsvorrichtung, mit der das Substrat (30) relativ zu dem Gefäß (40) an der Auslassöffnung (60) vorbei bewegbar ist,
wobei das Substrat (30) ein flexibles Band (30), insbesondere ein Polymerband oder ein Metallband, ist und wobei die Antriebsvorrichtung eine drehbare Antriebswelle (110) aufweist, die von einem Antrieb in Rotation versetzbar ist und auf der eine Aufwickelrolle (80) zu befestigen ist, um das Substrat (30), insbesondere das mit den Zellen (20) versehene Substrat (30), auf der Aufwickelrolle (80) aufzuwickeln, **dadurch gekennzeichnet, dass**
eine Spannvorrichtung (150, 160) zum Spannen des Substrates (30) vorgesehen ist, welche zumindest eine bewegliche Auflage (160) oder zumindest eine bewegliche Rolle aufweist, wobei die Auflage (160) oder die Rolle in einer Richtung (161) verschiebbar ist, die im Wesentlichen senkrecht zur Bewegungsrichtung des Substrates (30) orientiert ist, wobei die Oberseite (31) und die Unterseite (32) des Substrates (30) mit Abstandshaltern (140) versehen sind.

2. Anordnung nach Anspruch 1, **dadurch gekennzeichnet, dass**
- an der Oberseite (31) des Substrates (30), auf die die Zellen (20) aufgebracht werden, eine Haftschicht (33) vorgesehen ist, an der die Zellen (20) haften, insbesondere einen Adhäsionspromotor für die Zellen (20), und/oder
- an der Unterseite (32) des Substrates (30) eine für die Zellen (20) nichthaftende Schicht (34) vorgesehen ist.

3. Anordnung nach einem der vorhergehenden Ansprüche, **dadurch gekennzeichnet, dass** der Abstand zwischen der Auslassöffnung (60) und dem Substrat (30) einstellbar ist, derart, dass hiermit die Dicke h des sich auf dem Substrat (30) bildenden Flüssigkeitsfilms (90) einstellbar ist.

4. Anordnung nach einem der vorhergehenden Ansprüche, **dadurch gekennzeichnet, dass** ein Abstreifobjekt (130, 220) vorgesehen ist, dessen Abstand zum Substrat (30) einstellbar ist und mit dem die Dicke h eines sich auf dem Substrat (30) bildenden Flüssigkeitsfilms (90) einstellbar ist.

5. Anordnung nach, Anspruch 2, **dadurch gekennzeichnet, dass** die Haftschicht Polylysin, Fibronektin oder Kollagen aufweist.

6. Anordnung nach nach Anspruch 5, **dadurch gekennzeichnet, dass** die Haftschicht (33) derart strukturiert ist, dass sich die aufgebrachten Zellen (20) in definierten Positionen auf dem Substrat (30) befinden.

7. Verfahren zur Deponierung von Zellen (20) auf einem Substrat (30) zur Präparation einer Zellprobe mittels einer Anordnung zur Deponierung von Zellen (20) nach einem der Ansprüche 1 bis 6, bei dem die Zellen (20) aus dem Gefäß (40) auf das Substrat (30) aufgebracht werden, während das Substrat (30) an dem Gefäß (40) vorbei bewegt wird, wobei
- zunächst Zellen (20) aus dem Gefäß (40) auf Abschnitte des Bandes (30) aufgebracht werden und
- die Abschnitte des Bandes (30) mit dort aufgebrachten Zellen (20) auf einer Aufwickelrolle (80) aufgerollt werden

8. Verfahren nach Anspruch 7, **dadurch gekennzeichnet, dass** nach dem Aufbringen der Zellen (20) auf das Band (30) und vor dem Aufwickeln des Bandes (30) auf der Aufwickelrolle (80) eine Analyse der Zellprobe durchgeführt wird.

## Claims

1. Arrangement for depositing cells (20) on a substrate (30) for preparing a cell sample, having
- a vessel (40) for storing the cells (20) to be deposited on the substrate (30), the vessel (40) having an outlet opening (60) for removing cells (20) from the vessel (40), and
- a drive device, by means of which the substrate (30) can be moved past the outlet opening (60) relative to the vessel (40),
wherein the substrate (30) is a flexible band (30), more particularly a polymer band or a metal band, and wherein the drive device has a rotatable drive shaft (110), which can be made to rotate by a drive mechanism and onto which a take-up reel (80) should be attached in order to wind the substrate (30), more particularly the substrate (30) provided with the cells (20), onto the take-up reel (80), **characterized in that** a tensioning device (150, 160) is provided for tensing the substrate (30), which tensioning device has at least one moveable support (160) or at least one moveable reel, wherein the support (160) or the reel can be displaced in a direction (161) that is oriented substantially perpendicularly to the movement direction of the substrate (30), wherein the upper side (31) and the lower side (32) of the substrate (30) are provided with spacers (140).

2. Arrangement according to Claim 1, **characterized in that**
- an adhesive layer (33) to which the cells (20) adhere, more particularly an adhesion promoter for the cells (20), is provided on the upper side (31) of the substrate (30), onto which the cells (20) are applied, and/or
- a layer (34) to which the cells (20) do not adhere is provided on the lower side (32) of the substrate (30).

3. Arrangement according to one of the preceding claims, **characterized in that** the distance between the outlet opening (60) and the substrate (30) can be set such that this can be used to set the thickness h of the liquid film (90) forming on the substrate (30).

4. Arrangement according to one of the preceding claims, **characterized in that** a stripping object (130, 220) is provided, the distance of which from the substrate (30) can be set and by means of which it is possible to set the thickness h of a liquid film (90) forming on the substrate (30).

5. Arrangement according to Claim 2, **characterized in that** the adhesive layer has polylysine, fibronectin or collagen.

6. Arrangement according to Claim 5, **characterized in that** the adhesive layer (33) is structured such that the applied cells (20) are at defined positions on the substrate (30).

7. Method for depositing cells (20) on a substrate (30) for preparing a cell sample by means of an arrangement for depositing cells (20) according to one of Claims 1 to 6, in which the cells (20) are applied to the substrate (30) from the vessel (40) while the substrate (30) is moved past the vessel (40), wherein
- cells (20) are firstly applied to sections of the band (30) from the vessel (40) and
- the sections of the band (30) with the cells (20) applied thereon are wound onto a take-up reel (80).

8. Method according to Claim 7, **characterized in that** the cell sample is analyzed after the cells (20) have been applied to the band (30) and before the band (30) is wound onto the take-up reel (80).

## Revendications

1. Système de dépôt de cellules (20) sur un substrat (30) pour la préparation d'un échantillon cellulaire, comprenant
- un récipient (40) pour conserver les cellules (20) à déposer sur le substrat (30), le récipient (40) ayant une ouverture (60) de sortie pour prélever des cellules du récipient (40), et
- un dispositif d'entraînement, par lequel le substrat (30) peut être déplacé par rapport au récipient (40), en passant devant l'ouverture (60) de sortie,
dans lequel le substrat (30) a une bande (30) souple, notamment une bande en polymère ou une bande métallique, et dans lequel le dispositif d'entraînement a un arbre (110) d'entraînement tournant, qui peut être mis en rotation par un entraînement et sur lequel peut être fixé un rouleau (80) d'enroulement, afin d'enrouler le substrat (30), notamment le substrat (30) pourvu des cellules (20), sur le rouleau (80) d'enroulement, **caractérisé en ce qu'**il est prévu un dispositif (150, 160) de tension pour tendre le substrat (30), lequel dispositif de tension a au moins un support (160) mobile ou au moins un rouleau mobile, le support (160) ou le rouleau pouvant se déplacer dans une direction (161) sensiblement perpendiculaire à la direction de déplacement du substrat (30), la face (31) supérieure et la face (32) inférieure du substrat (30) étant pourvues d'entretoises (140).

2. Système suivant la revendication 1, **caractérisé en ce que**
- sur la face (31) supérieure du substrat (30), sur laquelle les cellules (20) sont déposées, est prévue une couche (33) d'adhésif à laquelle les cellules (20) adhèrent, notamment un promoteur d'adhérence des cellules (20), et/ou
- sur la face (32) inférieure du substrats (30) est prévue une couche (34) non adhérente pour les cellules (20).

3. Système suivant l'une des revendications précédentes, **caractérisé en ce que** la distance entre l'ouverture (60) de sortie et le substrat (30) est réglable, de manière à pouvoir ainsi régler l'épaisseur h de la pellicule (90) de liquide se formant sur le substrat (30).

4. Système suivant l'une des revendications précédentes, **caractérisé en ce qu'**il est prévu un objet (130, 220) de raclage, dont la distance au substrat (30) est réglable et par lequel l'épaisseur h d'une pellicule (90) de liquide se formant sur le substrat (30) est réglable.

5. Système suivant la revendication 2, **caractérisé en ce que** la couche d'adhésif a de la polylysine, de la fibronectine ou du collagène.

6. Système suivant la revendication 5, **caractérisé en ce que** la couche (33) d'adhésif est structurée de manière à ce que les cellules (20) déposées se trouvent dans des positions définies sur le substrat (30).

7. Procédé de dépôt de cellules (20) sur un substrat (30) pour la préparation d'un échantillon cellulaire au moyen d'un système de dépôt de cellules (20) suivant l'une des revendications 1 à 6,
dans lequel on dépose les cellules (20) du récipient (40) sur le substrat (30), tandis que le substrat (30) passe devant le récipient (40), dans lequel
- on dépose d'abord des cellules (20) du récipient (40) sur des parties de la bande (30) et
- on enroule les parties de la bande (30) ayant des cellules (20) qui y sont déposées sur un rouleau (80) d'enroulement.

8. Procédé suivant la revendication 7, **caractérisé en ce qu'**après le dépôt des cellules (20) sur la bande (30) et avant l'enroulement de la bande (30) sur le rouleau (80) d'enroulement, on effectue une analyse de l'échantillon cellulaire.
